# EUROPEAN PATENT APPLICATION

(11) **EP 3 021 382 A1**
(43) Date of publication of application: **18.05.2016**
(21) Application number: 15194263.8
(22) Date of filing: 12.11.2015
(51) Int. Cl.: H01M 2/34, H01M 2/30, H01M 2/06, H01M 2/08, H01M 10/42

(54) **SECONDARY BATTERY**

(30) Priority: 12.11.2014 KR 20140157329
(71) Applicant: Samsung SDI Co., Ltd., Yongin-si, Gyeonggi-do (KR)
(72) Inventor: WON, Heeyoun, Gyeonggi-do (KR); MOON, Daeyon, Gyeonggi-do (KR)
(74) Representative: Mounteney, Simon James

(57) **Abstract**

Provided is a secondary battery including: an electrode assembly; a cap plate that seals the electrode assembly; an electrode pin that is electrically connected to the electrode assembly and is assembled on the cap plate, wherein an insulating gasket is disposed between the cap plate and the electrode pin; and a temperature protection device that is provided on the cap plate and has one end directly connected to the electrode pin.

## Description

### BACKGROUND

### 1. Field

The invention relates to a secondary battery.

### 2. Description of the Related Art

According to development of wireless Internet and communication technologies, supply of portable computers operable by using a battery without having to use a power supply device is rapidly increasing. Generally, the portable computers are small and are easy to carry, and thus have excellent mobility. Accordingly, the portable computers are widely used for business uses or personal uses. In order for the portable computers to be used in various places irrespective of a power supply device, the portable computers may include one or more secondary batteries.

### SUMMARY

Generally speaking, there is a need to reduce the size of secondary batteries as consumer products become smaller and more portable. The present invention sets out to meet this need and also to reduce production costs.

According to one or more embodiments of the invention, a secondary battery includes: an electrode assembly; a cap plate that seals the electrode assembly; an electrode pin that is electrically connected to the electrode assembly and is assembled on the cap plate, wherein an insulating gasket is disposed between the cap plate and the electrode pin; and a temperature protection device that is provided on the cap plate and has one end directly connected to the electrode pin.

The temperature protection device may include: a transmitter; a first lead terminal that extends from one end of the transmitter and is electrically connected to the electrode pin; and a second lead terminal that extends from another end of the transmitter and is connected to a first electrode tab.

The first lead terminal may be disposed on the electrode pin to overlap at least a part of the electrode pin.

A size of an area of the first lead terminal may be smaller than a size of an area of the electrode pin.

The first lead terminal may be disposed on the electrode pin to be included in the electrode pin. The first lead terminal may be partially encompassed by the electrode pin in a plane of the electrode pin.

The first lead terminal may be welded and electrically connected to the electrode pin.

The electrode pin may be classified into a first end portion contacting the first lead terminal and a second end portion not contacting the first lead terminal, and the first and second end portions may be welded respectively by welding rods disposed on the first and second portions.

The secondary battery may further include a second electrode tab that is spaced apart from the electrode pin and provided on the cap plate, and have a different polarity from the first electrode tab.

The secondary battery may further include an insulating member disposed between the temperature protection device and the cap plate.

The transmitter and the second lead terminal may be provided on the insulating member.

At least some of the above and other features of the invention are set out in the claims.

### BRIEF DESCRIPTION OF THE DRAWINGS

Aspects of the invention will become apparent and more readily appreciated from the following description of embodiments thereof, taken in conjunction with the accompanying drawings in which:
FIG. 1 is a perspective view schematically illustrating a secondary battery according to an embodiment of the invention;
FIG. 2 is an exploded perspective view of the secondary battery of FIG. 1;
FIG. 3 is a view of a protection circuit module and a secondary battery, which are combined to each other, according to an embodiment of the invention;
FIG. 4 is a perspective view of some components of the secondary battery of FIG. 2; and
FIGS. 5 and 6 are respectively top and side views of the some components of FIG. 4.

### DETAILED DESCRIPTION

Reference will now be made in detail to embodiments of the invention, examples of which are illustrated in the accompanying drawings. In this regard, the invention may have different forms and should not be construed as being limited to the embodiments set forth herein. Accordingly, the embodiments are merely described below, by referring to the figures, to explain aspects of the present description.

In drawings, like reference numerals refer to like elements throughout and overlapping descriptions shall not be repeated.

While such terms as "first", "second", etc., may be used to describe various components, such components must not be limited to the above terms. The above terms are used only to distinguish one component from another.

An expression used in the singular encompasses the expression of the plural, unless it has a clearly different meaning in the context.

In the present specification, it is to be understood that the terms such as "including" or "having," etc., are intended to indicate the existence of the features or components, and are not intended to preclude the possibility that one or more other features or components may exist or may be added.

It will be understood that when a component or layer is referred to as being "on" another component or layer, the component or layer can be directly on another component or layer or intervening component or layers.

In drawings, for convenience of description, sizes of components may be exaggerated for clarity. For example, since sizes and thicknesses of components in drawings are arbitrarily shown for convenience of description, the sizes and thicknesses are not limited thereto.

In drawings, an X direction indicates a length direction, a Y direction that is perpendicular to the X direction indicates a thickness direction, and a Z direction that is perpendicular to the X and Y directions indicates a height direction.

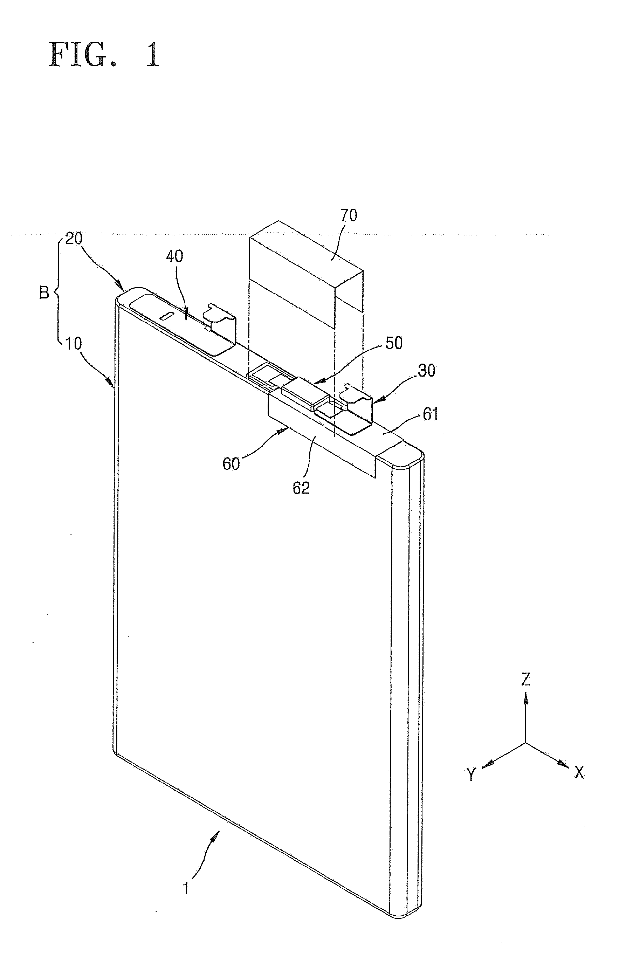

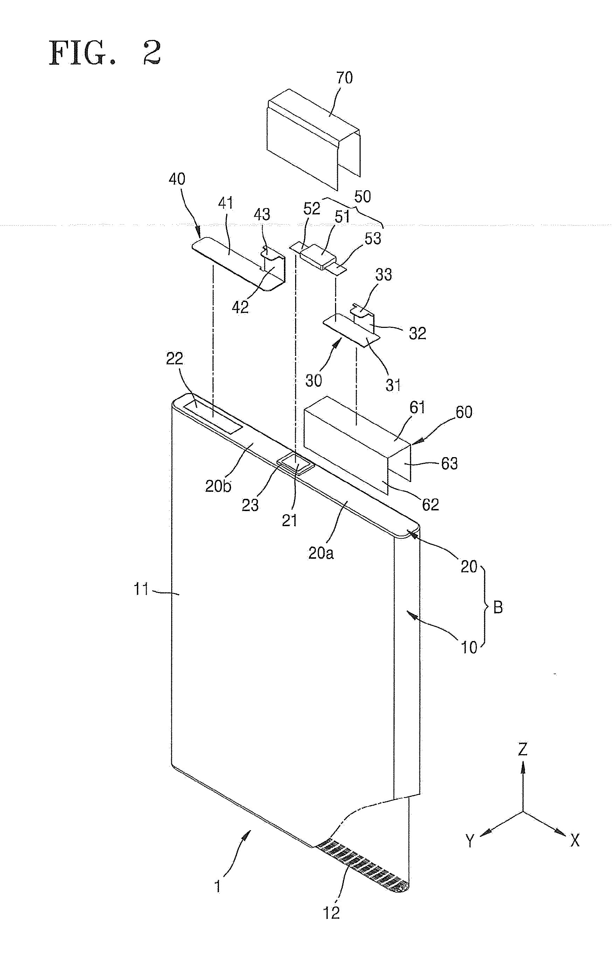

FIG. 1 is a perspective view schematically illustrating a secondary battery 1 according to an embodiment of the invention, and FIG. 2 is an exploded perspective view of the secondary battery 1 of FIG. 1. For convenience of understanding, in FIG. 2, a part of a can 10 is opened such that an electrode assembly 12 is exposed.

Referring to FIGS. 1 and 2, the secondary battery 1 according to an embodiment of the invention may include a bare cell B, a first electrode tab 30, a second electrode tab 40, an insulating member 60, and a fixing member 70.

The bare cell B may be a rechargeable secondary battery, and may include a lithium-ion battery. The bare cell B may have an approximately hexahedral prismatic shape. The bare cell B may include the can 10 including an opening, the electrode assembly 12 accommodated inside the can 10 through the opening, a cap plate 20 sealing the opening of the can 10, and an electrode pin 21 formed on the cap plate 20.

The can 10 has an approximately hexahedral shape having one opened side, and may be formed of a metallic material to secure strength. For example, the can 10 may be formed of aluminum or an aluminum alloy. After the electrode assembly 12 is inserted into the can 10 through the opening, the opening may be sealed by the cap plate 20. Like the can 10, the cap plate 20 may be formed of a metallic material, such as aluminum or an aluminum alloy. A region where the cap plate 20 and the can 10 contact each other may be combined via laser welding, and thus internal air-tightness may be maintained.

The electrode assembly 12 may include first and second electrode plates on which electrode active materials are coated, and a separator disposed between the first and second electrode plates. The first and second electrode plates have different polarities. The electrode assembly 12 may be manufactured by sequentially stacking the first electrode plate, the separator, and the second electrode plate, and then rolling them in a jelly roll shape.

In the current embodiment, the electrode assembly 12 has the jelly roll shape, but a shape of the electrode assembly 12 is not limited thereto. According to another embodiment, the electrode assembly 12 may be manufactured by sequentially stacking the first electrode plate, the separator, and the second electrode plate.

The electrode pin 21 may be formed on the cap plate 20. The electrode pin 21 may protrude in a direction away from the cap plate 20.

The first electrode plate may be electrically connected to the electrode pin 21, and the second electrode plate may be electrically connected to the cap plate 20. Since the first and second electrode plates have different polarities, the electrode pin 21 and the cap plate 20 also have different polarities. For example, the electrode pin 21 may have a negative pole and the cap plate 20 may have a positive pole. At this time, an insulating gasket 23 may be disposed between the electrode pin 21 and the cap plate 20 to prevent a short circuit between the electrode pin 21 and the cap plate 20.

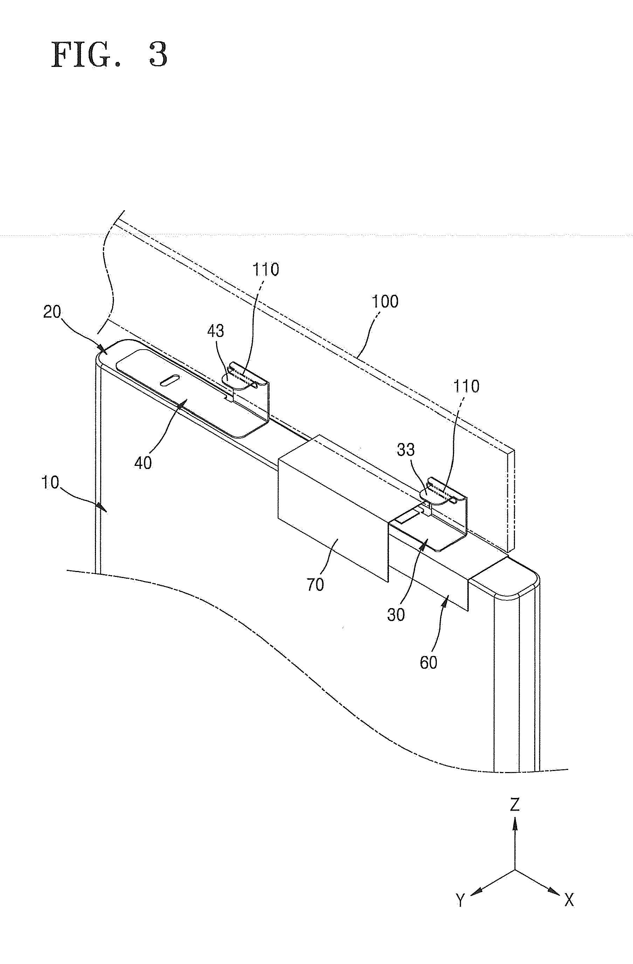

FIG. 3 is a view of a protection circuit module 100 and the secondary battery 1, which are combined to each other, according to an embodiment of the invention.

Referring to FIG. 3, the first and second electrode tabs 30 and 40 are disposed on a first surface of the bare cell B, for example, on the cap plate 20, and may electrically connect the secondary battery 1 to the protection circuit module 100. The secondary battery 1 may be electrically connected to the protection circuit module 100 as third regions 33 and 43 of the first and second electrode tabs 30 and 40 are inserted into and welded to a hole 110 formed in the protection circuit module 100.

The protection circuit module 100 is electrically connected to the bare cell B so as to control charging and discharging of the bare cell B, and may prevent overheating or an explosion generated due to overcharging, over-discharging, or an over-current.

Referring back to FIGS. 1 and 2, the first electrode tab 30 may be disposed on a partial region (a first region 20a) of the cap plate 20, and the second electrode tab 40 may be disposed on another region (a second region 20b) of the cap plate 20. According to an embodiment, the first and second electrode tabs 30 and 40 may be disposed opposite to each other around the electrode pin 21.

The first electrode tab 30 may be disposed on the insulating member 60 provided in the first region 20a of the cap plate 20, and electrically connected to the electrode pin 21 through a temperature protection device 50. The second electrode tab 40 may be electrically connected to the cap plate 20 by directly contacting and being welded to the second region 20b of the cap plate 20.

The first electrode tab 30 may include a first region 31 connected to the temperature protection device 50 and parallel to the cap plate 20, a second region 32 curved with respect to the first region 31, and the third region curved with respect to the second region 32 and parallel to the first region 31.

The second electrode tab 40 may include a first region 41 parallel to the cap plate 20, a second region 42 curved with respect to the first region 41, and the third region 43 curved with respect to the second region 42 and parallel to the first region 41.

The second electrode tab 40 and the cap plate 20 may be formed of different materials. For example, the cap plate 20 may be formed of aluminum or an aluminum alloy, and the second electrode tab 40 may be formed of nickel. Here, a combining piece 22 may be further disposed on the cap plate 20 in order to increase weldability between the second electrode tab 40 and the cap plate 20, which are formed of two types of materials. The combining piece 22 may be formed of a different material from the cap plate 20, for example, the same material as the second electrode tab 40.

Since the first electrode tab 30 is electrically connected to the electrode pin 21, and the second electrode tab 40 is electrically connected to the cap plate 20, the first and second electrode tabs 30 and 40 have different polarities. For example, the first electrode tab 30 may have a negative pole and the second electrode tab 40 may have a positive pole.

The temperature protection device 50 blocks a current flow when the bare cell B is over-heated up to a temperature equal to or higher than a certain temperature, thereby preventing the bare cell B from igniting or exploding.

The temperature protection device 50 may include a transmitter 51, and first and second lead terminals 52 and 53 that are respectively formed on two sides of the transmitter 51. The transmitter 51 may include a base device and a cover surrounding the base device.

The base device is a conducting and insulating reversible device according to a temperature, and for example, may be formed by including a polymer positive temperature coefficient (PTC) obtained by dispersing conductive particles, such as metal particles or carbon particles, in crystalline polymer, a fuse, a current blocking device, or a bi-metal.

The cover may surround an outer region of the base device to protect the base device. The cover may expose a bottom surface of the base device so that the base device may contact the insulating member 60.

The first and second lead terminals 52 and 53 may be electrically connected to the base device, and may extend in opposite directions through the cover. The first lead terminal 52 may contact the electrode pin 21 and the second lead terminal 53 may contact the first electrode tab 30.

The first and second lead terminals 52 and 53 may be formed at different heights from the transmitter 51. A height of the electrode pin 21 connected to the first lead terminal 52 and a height of the first electrode tab 30 connected to the second lead terminal 53 may be different from each other. Accordingly, a height of a surface where the first lead terminal 52 and the electrode pin 21 contact each other and a height of a surface where the second lead terminal 53 and the first electrode tab 30 contact each other may be different from each other.

When the first and second lead terminals 52 and 53 have different heights, the transmitter 51 is closely adhered to the insulating member 60 and the temperature protection device 50 is not detached from the cap plate 20, and thus a temperature may be accurately measured.

Since the second electrode tab 40 disposed on the cap plate 20 has the same polarity as the cap plate 20, the second electrode tab 40 and the cap plate 20 are not short-circuited. However, since the first electrode tab 30 disposed on the cap plate 20 has a different polarity from the cap plate 20, the first electrode tab 30 and the cap plate 20 may be short-circuited. Accordingly, the insulating member 60 may be disposed between the first electrode tab 30 and the cap plate 20.

The insulating member 60 is adhered on an outer surface of the bare cell B, thereby preventing a short circuit between the first electrode tab 30 and the outer surface of the bare cell B.

As described above, the cap plate 20 may be welded and combined to the can 10. Like the cap plate 20, the can 10 is formed of a conductive metal, and thus the can 10 may have the same polarity as the cap plate 20.

Since the outer surface of the bare cell B excluding the electrode pin 21, and the first electrode tab 30 have different polarities, the insulating member 60 may be manufactured to have a wide area, thereby preventing a short circuit between the first electrode tab 30 and the cap plate 20, and a short circuit between the first electrode tab 30 and an outer surface of the can 10.

The insulating member 60 may cover some of three outer surfaces of the bare cell B. For example, the insulating member 60 may include a first region 61 covering the first region 20a of the cap plate 20, which is a first surface of the bare cell B, a second region 62 perpendicular to the first region 61 and covering a part of a second surface 11 of the bare cell B, and a third region 63 perpendicular to the first region 61 and covering a part of a third surface of the bare cell B. A surface of the insulating member 60, which faces the bare cell B, may be adhesive and adhered to the outer surface of the bare cell B, as shown in FIG. 2

For example, the insulating member 60 may be formed of a thin polyethyleneterephthalate (PET) film.

The fixing member 70 may cover the first electrode tab 30 and the temperature protection device 50 so as to prevent the first electrode tab 30 and the temperature protection device 50 from being separated or detached from the bare cell B.

The temperature protection device 50 may be combined to the bare cell B as the first lead terminal 52 is directly welded to the electrode pin 21. Since only the first lead terminal 52 is welded and the second lead terminal 53 is not connected to the first electrode tab 30, the temperature protection device 50 may not be fixed. When the second lead terminal 53 is not fixed, the temperature protection device 50 may be detached from the bare cell B or the temperature protection device 50 may move to be short-circuited from the outer surface of the bare cell B.

Even when the second lead terminal 53 is connected to the first electrode tab 30, the first electrode tab 30 is not fixed to the hole 110 formed in the protection circuit module 100, and thus the first electrode tab 30 may be detached from the bare cell B or the first electrode tab 30 may move to be short-circuited from the outer surface of the bare cell B.

Since the fixing member 70 is disposed to cover the first electrode tab 30 or the temperature protection device 50, the first electrode tab 30 or the temperature protection device 50 may be prevented from being detached or short-circuited.

The fixing member 70 may be formed in the similar manner as the insulating member 60. For example, the fixing member 70 may include a portion covering the first electrode tab 30 and two end portions perpendicularly curved with respect to the portion. The fixing member 70 may be a molded product or an adhesive tape. When the fixing member 70 is an adhesive tape, a thickness of the secondary battery 1 may be prevented from being increasing.

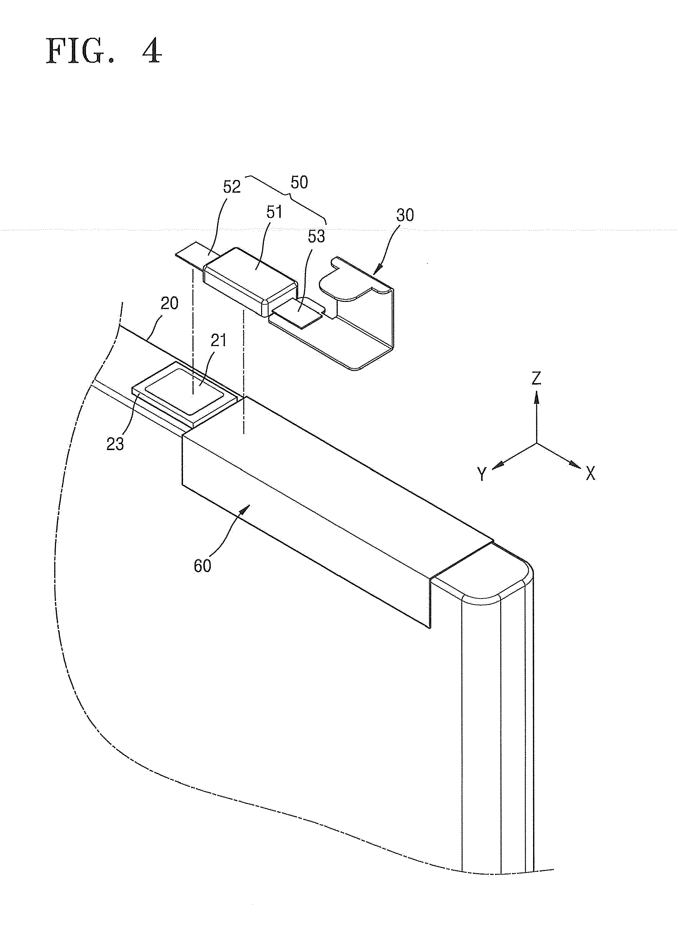

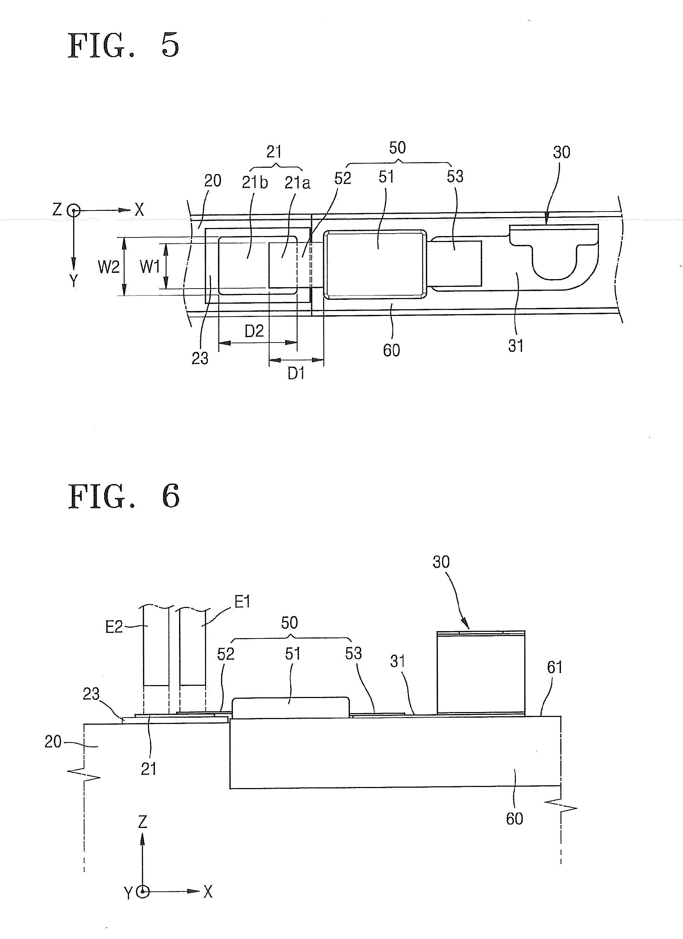

FIG. 4 is a perspective view of some components of the secondary battery 1 of FIG. 2, and FIGS. 5 and 6 are respectively top and side views of the some components of FIG. 4.

Connection and arrangement of the electrode pin 21 and the temperature protection device 50 will now be described with reference to FIGS. 4 through 6.

The secondary battery 1 includes the electrode assembly 12 of FIG. 2, the cap plate 20 for sealing the electrode assembly 12, and the electrode pin 21 electrically connected to the electrode assembly 12 and assembled on the cap plate 20 through the insulating gasket 23, and further includes the first lead terminal 52 combined on the electrode pin 21.

For example, the electrode pin 21 may be assembled on the cap plate 20 through the cap plate 20, and the insulating gasket 23 may be disposed between the electrode pin 21 and the cap plate 20, which have different polarities, such that the electrode pin 21 and the cap plate 20 are insulated from each other. Also, the electrode pin 21 and the first lead terminal 52 may be directly connected to each other. The electrode pin 21 and the first lead terminal 52 may be electrically connected by being combined to each other via welding.

The first lead terminal 52 may be disposed on the electrode pin 21 so as to overlap at least a part of the electrode pin 21. The first lead terminal 52 may be disposed on the electrode pin 21 to be included in the electrode pin 21. In other words, the first lead terminal 52 may be partially encompassed by the electrode pin 21 in a plane of the electrode pin. This is to say, the first lead terminal 52 may be disposed on the electrode pin 21 in such a way that when viewed from a plane parallel to and above of the electrode pin 21, the first lead terminal 52 may be surrounded by the electrode pin 21 at least partially. A size of an area of the first lead terminal 52 may be smaller than that of the electrode pin 21.

D1 denotes a length of the first lead terminal 52 in a length direction (hereinafter, referred to as a first direction) of the secondary battery, and D2 denotes a length of the electrode pin 21 in the first direction. D1 may be smaller than D2, such that the first lead terminal 52 may cover a part of the electrode pin 21.

W1 denotes a width of the first lead terminal 52 provided in a direction perpendicular to the first direction, and W2 denotes a width of the electrode pin 21. W1 may be smaller than W2, such that the first lead terminal 52 may cover a part of the electrode pin 21.

When a size of the first lead terminal 52 is smaller than that of the electrode pin 21, efficiency of a welding process may increase. In order to electrically connect the first lead terminal 52 to the electrode pin 21, the first lead terminal 52 is welded to the electrode pin 21 by using a welding rod. When the size of the first lead terminal 52 increases, a welding amount increases, and thus a welding time may increase. Accordingly, productivity of the secondary battery 1 may decrease. Also, energy consumption may increase as the size of the first lead terminal 52 to be melted increases.

The electrode pin 21 may be divided into a first end portion 21 a contacting the first lead terminal 52, and a second end portion 21 b not contacting the first lead terminal 52. A size of the first end portion 21 a may be smaller than that of the second end portion 21 b.

The first lead terminal 52 and the electrode pin 21 may be connected to each other via welding. During a welding process, the first lead terminal 52 and the electrode pin 21 may be combined to each other by using a plurality of welding rods. First and second welding rods E1 and E2 may be respectively disposed at the first and second end portions 21 a and 21 b to weld the first lead terminal 52 and the electrode pin 21.

The first welding rod E1 may be disposed on the first end portion 21 a, and the second welding rod E2 may be disposed on the second end portion 21 b. When the first and second welding rods E1 and E2 are simultaneously used for welding, a part of the first lead terminal 52 at the first end portion 21 a and a part of the electrode pin 21 at the second end portion 21 b are simultaneously melted, and thus the electrode pin 21 and the first lead terminal 52 are strongly connected to each other. Also, since the part of the first lead terminal 52 at the first end portion 21 a and the part of the electrode pin 21 at the second end portion 21 b are simultaneously melted, a time of welding the temperature protection device 50 and the electrode pin 21 may be reduced.

A temperature of the secondary battery 1 may be accurately sensed as the temperature protection device 50 is directly connected to the electrode pin 21. When a distance between the temperature protection device 50 and the electrode pin 21 increases, resistance increases, and thus it is difficult to accurately measure the temperature. When the temperature protection device 50 is directly connected to the electrode pin 21, a distance of a current moving from the electrode pin 21 to the transmitter 51 of the temperature protection device 50 is decreased, and thus an internal temperature of the bare cell B may be accurately measured.

The secondary battery 1 may be slim and compact as the temperature protection device 50 is directly connected to the electrode pin 21. When a terminal (tab) is additionally used to connect the temperature protection device 50 and the electrode pin 21, a size of the secondary battery 1 may increase. Since consumers' needs for downsizing a secondary battery are increasing in order to increase utilization of spaces of electronic devices, the size of the secondary battery 1 according to an embodiment may be decreased as the temperature protection device 50 is directly connected to the electrode pin 21. Also, production costs may be reduced since an additional terminal (tap) is not used.

As described above, according to one or more embodiments of the invention, a battery pack having high assemblability and a thin thickness may be provided.

While one or more embodiments have been described with reference to the figures, it will be understood by those of ordinary skill in the art that various changes in form and details may be made therein without departing from the scope of the invention as defined by the following claims.

## Claims

1. A secondary battery comprising:
an electrode assembly;
a cap plate;
an electrode pin that is electrically connected to the electrode assembly and is assembled on the cap plate, wherein an insulating gasket is disposed between the cap plate and the electrode pin; and
a temperature protection device that is provided on the cap plate and has one end directly connected to the electrode pin.

2. A secondary battery according to claim 1, wherein the temperature protection device comprises:
a transmitter;
a first lead terminal that extends from one end of the transmitter and is electrically connected to the electrode pin; and
a second lead terminal that extends from another end of the transmitter and is connected to a first electrode tab.

3. A secondary battery according to claim 2, wherein the first lead terminal is disposed on the electrode pin to overlap at least a part of the electrode pin.

4. A secondary battery according to claim 2 or 3, wherein a size of an area of the first lead terminal is smaller than a size of an area of the electrode pin.

5. A secondary battery according to claim 2 or 3, wherein the first lead terminal is partially encompassed by the electrode pin in a plane of the electrode pin.

6. The secondary battery according to one of claims 2 to 5, wherein the first lead terminal is welded and electrically connected to the electrode pin.

7. A secondary battery according to claim 6, wherein the electrode pin is classified into a first end portion contacting the first lead terminal and a second end portion not contacting the first lead terminal, and the first and second end portions are adapted to be welded respectively by welding rods disposed on the first and second portions.

8. A secondary battery according to one of claims 2 to 7, further comprising a second electrode tab that is spaced apart from the electrode pin and provided on the cap plate, and has a different polarity from the first electrode tab.

9. A secondary battery according to one of claims 2 to 8, further comprising an insulating member disposed between the temperature protection device and the cap plate.

10. A secondary battery according to claim 9, wherein the transmitter and the second lead terminal are provided on the insulating member.
